Europäisches Patentamt

(19) European Patent Office

Office européen des brevets

(11) Publication number: **0 257 976**
A2

(12) **EUROPEAN PATENT APPLICATION**

(21) Application number: 87307339.9

(22) Date of filing: 19.08.87

(51) Int. Cl.⁴: **B 60 T 11/16**

(30) Priority: 23.08.86 GB 8620562

(43) Date of publication of application:
02.03.88 Bulletin 88/09

(84) Designated Contracting States: **DE FR GB IT**

(71) Applicant: **LUCAS INDUSTRIES public limited company
Great King Street
Birmingham, B19 2XF West Midlands (GB)**

(72) Inventor: **Campbell, Roy
The Corner House 1, Marlbrook Lane Lickey Road
Bromsgrove Worcestershire (GB)**

**Price, Anthony George
14, Meadow Lane Crossycelliog
Cwmbran Gwent, NP44 2EY (GB)**

**Fuller, David James
10, Blenheim Court St. Dials
Cwmbran Gwent (GB)**

**The other inventor has agreed to waive his entitlement to
designation**

(74) Representative: **Waite, Anthony William et al
MARKS & CLERK Alpha Tower Suffolk Street Queensway
Birmingham B1 1TT (GB)**

(54) **Master cylinder.**

(57) An hydraulic master cylinder has a pressure cylinder (1)
mounting a reservoir (2) which communicates with the interior
of the cylinder via a radial passage (3) and axial passage (4). A
piston (5) is reciprocable along a bore (6) of the cylinder and
fluid flow between the reservoir and bore is controlled by a
centre valve (8) actuated by the piston. A solenoid (10)
mounted on the cylinder (1) can be activated to cause a push
rod (11) to disable the centre valve, and thereby prevent
pressurising of fluid within the cylinder.

FIG 1

EP 0 257 976 A2

## Description

MASTER CYLINDER.

This invention relates to an hydraulic master cylinder, primarily for use in vehicle hydraulic braking systems. The master cylinder of the invention is especially useful in the hydraulic braking systems of agricultural tractors in which twin pressure chambers in one or more master cylinders are employed to control the rear wheel brakes on respective sides of the vehicle and arranged to be selectively operated either simultaneously for normal braking, or individually to lock one or other of the vehicle wheels to provide steering assistance, as will be well understood.

In commonly used tractor braking systems of the aforesaid kind, pedals associated with the respective pressure chambers are latched together for braking during normal driving conditions, the pedals being unlatched and operated individually for steering assistance in order to effect spin turns during an agricultural operation for example. Tractor operatives frequently operate such systems continuously with the pedals unlatched, which gives rise to the possibility of an inadvertent spin turn and a potentially dangerous situation in the event that a vehicle is driven, for example, on a public road.

An object of the present invention is to provide an hydraulic master cylinder which is controllable in such a manner as to minimise or eliminate the aforesaid danger and also to provide a suitable braking system for use on a tractor requiring both straight line and steering assist braking modes.

According to the invention, a master cylinder comprises a pressure cylinder containing at least one pressure chamber with a respective piston therein operable to pressurise hydraulic fluid within the chamber, valve means operable in a first condition to permit the flow of fluid into the or each chamber along an inlet path and in a second condition to close the path to permit the or each piston to pressurise fluid within its associated chamber for brake actuation, and electrically actuated disabling means operatively associated with the valve means and operable selectively to prevent the valve means from assuming said second condition.

In one convenient arrangement, the valve means is a centre valve controlling flow of fluid from a reservoir through an inlet port of the cylinder, said disabling means acting, when actuated, to prevent the centre valve from closing the port. The disabling means is preferably a solenoid which may conveniently act upon the valve by way of a push rod to prevent said port closure.

According to another aspect of the invention, an hydraulic braking system comprises a pair of pressure chambers in one or more master cylinders of the invention associated respectively with wheels on one side only of a vehicle and connected to a single actuating device for simultaneous operation thereby, and an electrical control unit connected to the disabling means of the pressure chambers and operable by a driver actuated control to cause disablement of one chamber at a time to establish a "steering assist" mode in which braking occurs at one side of the vehicle only.

Preferably, the control unit causes a timer to impose a timed duration upon the steering assist mode, the mode being cancelled after said duration without the intervention of an operative.

The invention will now be described, by way of example, with reference to the accompanying drawings in which:-

Figure 1 is a longitudinal cross-section of one form of the master cylinder of the invention, and

Figure 2 is a diagrammatic representation of one form of hydraulic braking system incorporating a pair of master cylinders according to the invention.

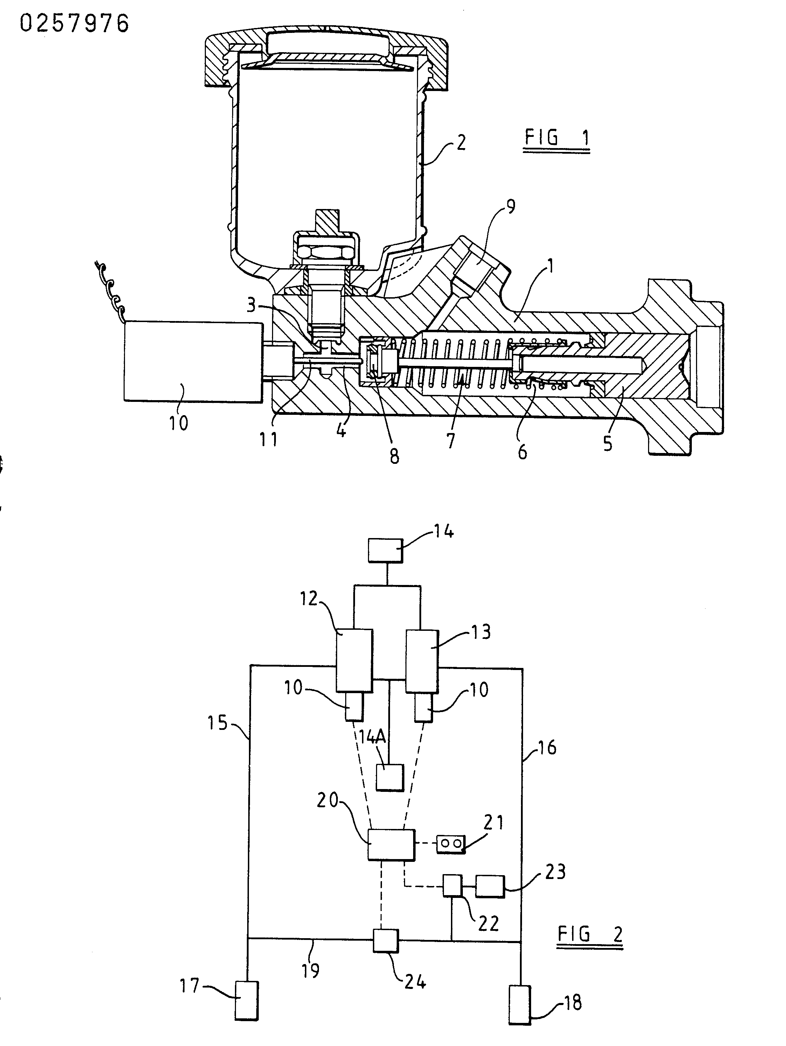

Referring to Figure 1 of the drawings, the master cylinder therein illustrated includes a pressure cylinder 1 upon which is mounted a fluid reservoir 2, the interior of which communicates with the interior of the cylinder by means of a radial passage 3 and an axial passage 4. A piston 5 is reciprocable along an internal bore 6 of the cylinder 1 and is connected by means of a conventional rod and spring assembly, indicated generally at 7 to a centre valve 8, by means of which inward movement of the piston causes the centre valve to close the inner end of the passage 4, enabling pressure to be built up within the cylinder 1 for discharge via an outlet port 9 to a braking system.

A solenoid 10 is mounted on the forward end of the pressure cylinder relative to the travel of the piston 5 and a push rod 11 actuated by the solenoid extends through the axial passage 4 into close proximity with the centre valve 8.

With the components in their positions as illustrated, the master cylinder is able to operate in conventional manner to supply pressurised fluid via the outlet port 9 to the braking system. Typically, the master cylinder would be connected, in use, to one rear wheel of a tractor and would co-operate, in the manner to be described, with another similar master cylinder connected to the other rear wheel to provide normal braking and a "steering assist" mode to enable the tractor to perform spin turns, when required.

The master cylinder illustrated is placed in the steering assist mode by actuation of the solenoid 10 to extend the push rod 11 into the cylinder 6 beyond the right hand end of the passage 4 to a position in which it prevents the centre valve 8 from moving sufficiently far to the left to close the passage 4. With the solenoid thus actuated, the master cylinder is effectively disabled since it is impossible for the piston 5 to generate pressure within the bore 6 to operate the braking system. By using a pair of such master cylinders connected respectively to the rear wheels of the tractor, it will be seen that disabling the master cylinder controlling one wheel will enable braking to be applied to the other wheel only, when desired, permitting the tractor to perform a spin turn.

It will be understood that the solenoid may be arranged to act other than axially to disable its associated valve. Each solenoid may, for example, be arranged to co-act generally radially with a respective valve, which arrangement is particularly applicable in the case of a tandem master cylinder having a plurality of pressure chambers within a single cylinder body.

Figure 2 illustrates a typical tractor braking system which includes a pair of master cylinders of the invention designated respectively 12 and 13 which are connected by any convenient means to a single pedal 14 for simultaneous operation thereby. During normal braking, hydraulic fluid is supplied under pressure through lines 15, 16 to individual rear tractor wheels 17, 18, the lines 15, 16 being interconnected by a compensation line 19 which ensures that equal braking forces are applied to the two wheels, as is well understood in the art. The respective solenoids 10 of the master cylinders 12, 13 are connected to an electronic controller 20, which may conveniently be of the kind described in our co-pending European Patent Application No.87109700.2, the controller 20 being actuated by means of a switch device 21 in the driver's cab of the vehicle to control operation of the solenoids 10. In this particular embodiment, the controller is also connected to a solenoid valve 22 which is arranged to control the supply of pressure fluid via a valve 23 to the front brakes of the vehicle or to the brakes of a trailer towed by the vehicle, or both. A further solenoid valve 24 connected to the controller is incorporated in the compensation line 19.

With the solenoids 10 and solenoid valves 22, 23 in their inoperative positions, the master cylinders 12, 13 will be actuated simultaneously by operation of the pedal 14 in order to apply braking force to both of the vehicle wheels 17, 18 and straight line braking will result. In the event that a spin turn is required, the driver's control switch 21 is set to a position indicating either a right or left hand turn and the controller responds by actuating one of the solenoids 10 to disable one of the master cylinders 12, 13 by action of the corresponding push rod 11 on the centre valve 8 of that master cylinder. Since this master cylinder can no longer generate braking pressure, the braking imbalance resulting from application of pressure by the other master cylinder to the appropriate wheel will produce a steering assist mode in which the vehicle effectively pivots about the braked wheel to perform a spin turn. The controller performs a timing function to ensure that the steering assist mode is only established for a limited predetermined period, following which the solenoids are deactivated and the system returns to the normal straight line braking mode. By this means, it is ensured that the system cannot be inadvertently placed or left in the steering assist mode and the dangers described relating to some conventional systems are thereby obviated.

The controller 20, when actuated in the manner described, also operates the solenoid 22 to temporarily cut off the supply of braking pressure to auxiliary braking systems, such as the brakes of the towed vehicle and also operates the solenoid 24 to render inoperative the compensation line 19 during the steering assist mode.

The controller 20 may readily be programmed to exert other controls on the operation of the system. For example, the system may be rendered speed dependent so that it is not possible to perform a spin turn in the event that the vehicle is travelling faster than a predetermined speed. Spin turns can also be prevented in the event that the vehicle is travelling along or across a slope of gradient greater than a predetermined maximum. It is also possible for the controller to sense the centre of gravity of the tractor and any implement or trailer towed thereby and to prevent a spin turn if the centre of gravity of the combination is too high. In all of these and other conditions in which spin turns are inhibited, the controller may be programmed to provide an audible or visual signal to the driver to indicate that a spin turn is not possible at a particular time. The controller may also provide a facility enabling the electrical part of the system, including the controller and solenoids, to be instantly checked by the driver, as for example by pressing a button.

In an alternative embodiment of the master cylinder of the invention, the pressure cylinder may be of the tandem type having a stepped bore with a pair of pistons therein operable by a single pedal. Electrical disabling means are provided for the respective pressure chambers and can be operated by a controller in the manner discussed above to provide a steering assist mode, when required.

**Claims**

1. A master cylinder comprising a pressure cylinder (1) containing at least one pressure chamber (6) with a respective piston (5) therein operable to pressurise hydraulic fluid within the chamber, valve means (8) operable in a first condition to permit the flow of fluid into the or each chamber along an inlet path (3, 4) and in a second condition to close the path to permit the or each piston to pressurise fluid within its associated chamber for brake actuation, characterised by electrically actuated disabling means (10, 11) operatively associated with the valve means (8) and operable selectively to prevent the valve means from assuming said second condition.

2. A master cylinder according to Claim 1 characterised in that the valve means is a centre valve (8) controlling flow of fluid from a reservoir (2) through an inlet port (3) of the cylinder, said disabling means (10, 11) acting, when actuated, to prevent the centre valve (8) from closing the port (3).

3. A master cylinder according to Claim 1 or Claim 2 characterised in that the disabling means is a solenoid (10).

4. A master cylinder according to Claim 3 characterised in that the solenoid (10) acts on the valve (8) by way of a push rod (11) to prevent said port closure.

5. A master cylinder according to Claim 4 characterised in that the solenoid (10) is mounted on the forward end of the cylinder (1) and the push rod (11) extends through an axial passage (4) which forms part of said inlet path.

6. An hydraulic braking system comprising a pair of pressure chambers in one or more master cylinders (12, 13) of the invention each associated respectively with a wheel (17, 18) on one side only of a vehicle and connected to a single actuating device (14) for simultaneous operation thereby, characterised by an electrical control unit (20) connected to the disabling means (10) of the pressure chambers and operable by a driver actuated control (21) to cause disablement of one chamber at a time to establish a "steering assist" mode in which braking occurs at one side of the vehicle only.

7. A braking system according to Claim 6 characterised in that the control unit (20) causes a timer to impose a timed duration upon the steering assist mode, the mode being cancelled after said duration without the intervention of an operative.

8. A braking system according to Claim 6 or Claim 7 characterised in that the cylinders are interconnected by a compensation passage (19) and a further solenoid valve (24) associated with said passage is actuated by the control unit (20) to close off the passage (19) when one of the pressure chambers is disabled to provide said "steering assist" mode.

9. A braking system according to any one of Claims 6 to 8 characterised in that said chambers are incorporated in a tandem master cylinder, and each is provided with disabling means (10) under the control of the control unit (20).

0257976

FIG 1

FIG 2